# FASCICULE DE BREVET EUROPEEN

(11) **EP 0 604 246 B1**
(45) Date de publication et mention de la délivrance du brevet: **23.07.1997**
(21) Numéro de dépôt: 93402789.7
(22) Date de dépôt: 17.11.1993
(51) Int. Cl.: H04N 1/00

(54) **Plateau pour supporter une feuille de papier en vue de son introduction dans un appareil tel qu'un télécopieur**
Papierzuführungsanlage zum Gebrauch zum Beispiel in einem Fakzimilegerät
Paper feeding tray for use in for example a facsimile device

(30) Priorité: 22.12.1992 FR 9215513
(43) Date de publication de la demande: 29.06.1994
(73) Titulaire: SOCIETE D'APPLICATIONS GENERALES D'ELECTRICITE ET DE MECANIQUE SAGEM, F-75783 Paris Cédex 16 (FR)
(72) Inventeur: Cavarero, Eric, F-95000 Cergy (FR); Vegeais, Patrick, F-78112 Fourqueux (FR); Garcia, Salvador, F-95100 Argenteuil (FR)
(74) Mandataire: Bloch, Gérard

(56) Documents cités:
- EP-A- 0 416 596
- FR-A- 2 524 444
- US-A- 5 166 812

## Description

La présente invention concerne un plateau pour supporter une feuille de papier en vue de son introduction dans un appareil tel qu'un télécopieur.

Un des objectifs actuellement recherché par les fabricants de tels appareils est de réduire au minimum leurs dimensions hors tout.

Or, une fraction non négligeable de ces dimensions est occupée par les plateaux de support des feuilles à introduire, du fait de la diminution constante des dimensions des équipements logés à l'intérieur du boîtier proprement dit des appareils.

Il est connu de réduire la dimension de ces plateaux dans la direction d'introduction du papier en les réalisant en deux parties articulées autour d'un axe perpendiculaire à cette direction. Lorsque l'appareil n'est pas en utilisation, la partie du plateau la plus éloignée du boîtier de l'appareil est repliée sur l'autre partie, réduisant ainsi la dimension hors tout de l'appareil lorsqu'il n'est pas utilisé.

En utilisation, la partie extérieure du plateau est dépliée de manière à supporter une feuille à introduire sur toute sa longueur.

Un tel agencement présente l'inconvénient d'être relativement complexe du fait de l'articulation, et d'être par conséquent onéreux et relativement fragile.

On a également proposé, dans le document FR-A-2 524 444, un plateau d'alimentation en feuilles de papier pour machine à imprimer, comportant des guides latéraux et un chassis porteur réalisé sous la forme de fils métalliques pliés. Les guides et le chassis sont à des niveaux différents de manière à conférer un cintrage aux feuilles de papier.

Un tel cintrage, qui confère aux feuilles de papier une forme sensiblement cylindrique d'axe parallèle à la direction d'introduction, augmente considérablement la résistance en flexion des feuilles perpendiculairement à la direction d'introduction et permet ainsi aux feuilles de s'auto-supporter, y compris dans leur partie éloignée du boîtier de l'appareil où elles sont en porte à faux et par conséquent non supportées par le plateau.

Le plateau peut ainsi être de dimension réduite, y compris lorsque l'appareil est en utilisation.

Un tel plateau est toutefois de réalisation complexe, comprenant de nombreuses pièces à assembler entre elles, à régler, et à monter sur le bati de la machine. Il ne peut être réalisé en une seule opération, ce qui est pourtant souhaitable pour diminuer les coûts de fabrication de l'appareil. En outre, il est relativement peu robuste.

La présente invention vise à pallier ces inconvénients.

A cet effet l'invention a pour objet un plateau pour supporter une feuille de papier en vue de son introduction dans un appareil tel qu'un télécopieur, comportant des moyens aptes à conférer à une feuille de papier posée sur le plateau, un cintrage d'axe sensiblement parallèle à la direction d'introduction de la feuille, caractérisé par le fait que ledit plateau est réalisé sous la forme d'une plaque, et que lesdits moyens comprennent au moins un bossage réalisé d'une seule pièce avec ladite plaque.

Un tel plateau, tout en assurant le cintrage souhaité de la feuille, peut être réalisé très simplement en une seule opération, par exemple par moulage de matière plastique. Il peut donc être obtenu à bon marché et être monté rapidement sur le boitier de l'appareil. Il est en outre d'une grande solidité.

Dans un mode de réalisation particulier, le plateau selon l'invention comporte deux bossages sensiblement symétriques par rapport à l'axe du plateau parallèle à la direction d'introduction de la feuille.

On décrira maintenant à titre d'exemple non limitatif un mode de réalisation particulier de l'invention, en référence aux dessins annexés dans lesquels :
- la figure 1 est une vue partielle de dessus d'un télécopieur comprenant un plateau selon l'invention,
- la figure 2 est une vue en coupe selon la ligne II-II de la figure 1, et
- la figure 3 est une vue de côté de l'appareil de la figure 1.

Cet appareil comprend un boîtier 1 comportant une fente 2 en vue de l'introduction d'une feuille de papier 3 en direction de rouleaux d'entraînement 4.

Un plateau de support 5 pour la feuille 3 est fixé par tout moyen convenable au boîtier 1 pour affleurer au bord inférieur de la fente 2 de manière à amener la feuille 3 au travers de cette fente vers les rouleaux 4. Le plateau 5 a été ici représenté horizontal mais il est de préférence incliné vers le bas en direction de la fente 2 de manière que la feuille 3 soit amenée par son propre poids au contact des rouleaux 4.

Selon l'invention, le plateau 5 est réalisé sous la forme d'une plaque, par exemple en matière plastique moulée.

Egalement selon l'invention, le plateau 5 comporte deux bossages 6 réalisés d'une seule pièce avec la plaque et disposés symétriquement par rapport à l'axe 7 du plateau 5 parallèle à la direction d'introduction de la feuille 3, matérialisée par la flèche 8.

Dans cette direction, le plateau 5 possède une longueur telle qu'une feuille 3 de dimension standard dépasse à l'extérieur du plateau lorsqu'elle est au contact des rouleaux 4.

Les bossages 6 présentent ici, vus de dessus, une forme profilée dans la direction de l'axe 7.

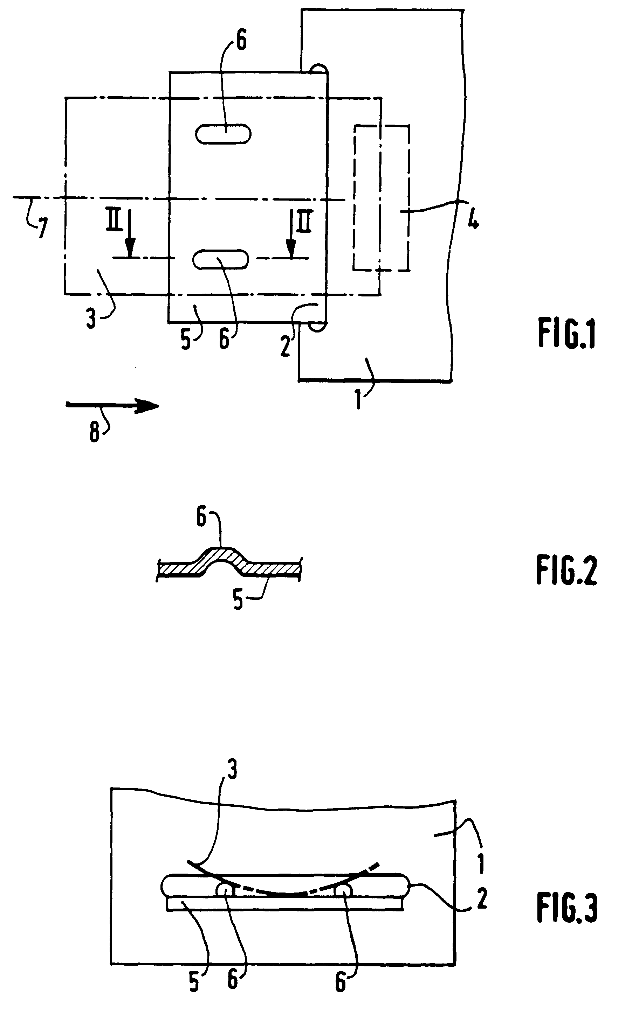

Les bords de la feuille 3 parallèles à la flèche 8 sont soulevés par les bossages 6 de manière à cintrer la feuille comme représenté à la figure 3. Cette feuille 3 adopte ainsi une forme plus ou moins cylindrique (ou tronconique du fait que le cintrage diminue en s'approchant des rouleaux 4), augmentant ainsi considérablement l'inertie de la section de la feuille 3 dans un plan perpendiculaire à l'axe 7 et l'empêchant ainsi de se plier vers le bas dans sa zone la plus éloignée du boîtier 1 où elle n'est pas soutenue par le plateau 5.

## Revendications

1. Plateau (5) pour supporter une feuille de papier (3) en vue de son introduction dans un appareil tel qu'un télécopieur, comportant des moyens aptes à conférer à une feuille de papier posée sur le plateau un cintrage d'axe sensiblement parallèle à la direction d'introduction de la feuille, caractérisé par le fait que ledit plateau est réalisé sous la forme d'une plaque, et que lesdits moyens comprennent au moins un bossage (6) réalisé d'une seule pièce avec ladite plaque.

2. Plateau selon la revendication 1, comportant deux bossages (6) sensiblement symétriques par rapport à l'axe du plateau parallèle à la direction (8) d'introduction de la feuille.

## Patentansprüche

1. Träger (5) zum Tragen eines Papierblattes (3) im Hinblick auf seine Einführung in ein Gerät, wie einen Telekopierer, enthaltend Mittel, die geeignet sind, einem auf die Platte gelegten Papierblatt eine Krümmung zu erteilen, dessen Achse im wesentlichem parallel zur Einführrichtung des Blattes ist, daurch gekennzeichnet, daß dieser Träger in Form einer Platte realisiert ist, und daß diese Mittel mindestens einen in einem einzigen Stück mit dieser Platte ausgebildeten Vorsprung (6) umfassen.

2. Träger nach Anspruch 1, enthaltend zwei im wesentlichen zu der parallel zur Richtung (8) des Einführung des Blattes liegenden Achse der Platte symmetrische Vorsprünge (6).

## Claims

1. Tray (5) for supporting a sheet of paper (3) with a view to its introduction into an apparatus such as a facsimile machine, comprising means able to impart to a sheet of paper placed on the tray a curvature about an axis substantially parallel to the direction of introduction of the sheet, characterised by the fact that said tray is made in the form of a plate and that said means comprise at least one boss (6) made in one piece with said plate.

2. Tray according to Claim 1, comprising two bosses (6) substantially symmetrical with respect to the axis of the tray parallel to the direction (8) of introduction of the sheet.
